# NEUE EUROPÄISCHE PATENTSCHRIFT

(11) **EP 0 698 048 B2**
(45) Veröffentlichungstag und Bekanntmachung des Hinweises auf die Entscheidung über den Einspruch: **05.03.2003**
(45) Hinweis auf die Patenterteilung: 24.06.1998
(21) Anmeldenummer: 94917595.4
(22) Anmeldetag: 09.05.1994
(51) Int. Cl.: C08G 18/08, C08J 3/03, C09D 175/06

(54) **ZWEIKOMPONENTEN-BESCHICHTUNGSMITTEL**
TWO-COMPONENT COATING AGENT
AGENT DE REVETEMENT A DEUX COMPOSANTS

(30) Priorität: 11.05.1993 DE 4315593
(43) Veröffentlichungstag der Anmeldung: 28.02.1996
(73) Patentinhaber: WESTDEUTSCHE FARBENGESELLSCHAFT BRÜCHE & CO. GMBH & CO. KG, D-45356 Essen (DE)
(72) Erfinder: SWORA, Dietmar, D-59439 Holzwickede (DE); SCHILBACH, Jochen, D-45133 Essen (DE)
(74) Vertreter: Albrecht, Rainer Harald, Dr.-Ing.
(86) Internationale Anmeldenummer: EP9401478
(87) Internationale Veröffentlichungsnummer: WO94026799

(56) Entgegenhaltungen:
- EP-A- 0 486 881
- EP-A- 0 557 844
- EP-B- 0 237 983
- BE-A- 660 666
- DE-A- 3 321 180
- DE-A- 3 414 807
- DE-C- 3 339 230
- US-A- 3 213 049
- US-A- 4 396 738
- US-A- 5 200 489

## Beschreibung

Die Erfindung betrifft einen Zweikomponentenlack, bestehend aus
einer wasserverdünnbaren Bindemittelkomponente auf Polyester- und/oder Polyacrylatharzbasis, wobei das Polyester- und/oder Polyacrylatharz einen Gehalt an Hydroxylgruppen von 2,5 bis 8 Gew.-% OH aufweist, und
einer flüssigen organischen Polyisocyanatkomponente aus mindestens einem Polyisocyanat mit freien Isocyanatgruppen.

Der Zweikomponentenlack ist durch Einrühren der Polyisocyanatkomponente in die Bindemittelkomponente für begrenzte Zeit gebrauchsfertig und härtet unter Vernetzung des Bindemittelkomponente mit Polyisocyanat aus.

Bei dem aus EP-A-0 358 979 bekannten wasserverdünnbaren Zweikomponentenlack, von dem die Erfindung ausgeht, enthält das als Bindemittelkomponente eingesetzte Polymerisat Sulfonat- und/oder Carboxylatgruppen. Bei der Herstellung des Polymerisats werden Monomere mitverwendet, die Carboxyl- und/oder Sulfonsäuregruppen enthalten. Durch Neutralisation der Säuregruppen mit anorganischen Basen oder Aminen wird eine Wasserlöslichkeit bzw. Dispergierbarkeit des Polymerisats erreicht. Es zeigt sich jedoch, daß das Neutralisationsmittel einen negativen Einfluß hat auf Wasserbeständigkeit, Wetterbeständigkeit, Korrosionsschutz und Topfzeit des Beschichtungsmittels.

Die Bindemittelkomponente eines aus DE-A-4 135 571 bekannten Zweikomponentenlackes enthält ein hydrophil modifiziertes Polyesterharz, welches durch Einbau von Carboxylatgruppen wasserlöslich ist. Polyacrylatharze, sofem sie Carboxylat- und Sulfonatgruppen enthalten, können in der Mischung mitverwendet werden. Es ergeben sich auch hier die schon beschriebenen Nachteile.

Aus US-A-5 200 489 ist ein Zweikomponenten-Beschichtungsmittel bekannt, deren Polyisocyanatkomponente einen Emulgator zur Verbesserung der Dispergierbarkeit in wässrigen Systemen enthält. Die Bindemittelkomponente kann wasserlösliche Acrylharze, wasserdispergierbare Polyhydroxylverbindungen sowie wässrige Dispersionen von Homo- und Copolymerisaten aus verschiedenen olefinisch ungesättigten Monomeren aufweisen.

Aus der DE-A-1 595 685 ist femer ein Verfahren zur Herstellung von modifizierten, wässrigen Polymerisat-Dispersionen bekannt, bei denen eine wässrige Dispersion von Polymerisaten oder Mischpolymerisaten mit einem freie NCO-Gruppen aufweisenden Reaktionsprodukt einer höhermolekularen, mindestens zwei aktive Wasserstoffatome besitzenden Verbindung mit einem Überschuß an Polyisocyanat umgesetzt wird. Das freie NCO-Gruppen aufweisende Reaktionsprodukt wird in die wässrige Polymerisat-Dispersion eingerührt. Die Mischung bleibt über einen Zeitraum von drei bis zehn Tagen stehen, bis der Gehalt an freien NCO-Gruppen auf Null abgenommen hat. Es resultiert eine stabile, chemisch ausreagierte Dispersion, die mit Wasser verdünnbar ist und als Beschichtungsmittel und Imprägnierungsmittel, vorzugsweise als Appreturmittel im Textilbereich, einkomponentenseitig einsetzbar ist. Zur Entwicklung chemisch vernetzender Zweikomponenten-Beschichtungsmittel haben diese Maßnahmen nichts beigetragen.

Die EP-A-0 486 881 beschreibt Polyisocyanatzubereitungen zur Modifizierung von wässrigen Beschichtungsmitteln, die als stabile und chemisch ausreagierte Emulsionen/Dispersionen vorliegen und sich durch eine gute Lagerstabilität auszeichnen. Die Beschichtungsmittel sind einkomponentig einsetzbar.

Der Erfindung liegt die Aufgabe zugrunde, einen wasserverdünnbaren Zweikomponentenlack der eingangs beschriebenen Art anzugeben, der eine gute Wasser- und Wetterfestigkeit aufweist.

Gegenstand der Erfindung und Lösung dieser Aufgabe ist ein Zweikomponentenlack, nach Patentanspruch 1.

Der Zweikomponentenlack ist durch Einrühren der Polyisocyanatkomponente b) in die Emulsion a) für begrenzte Zeit gebrauchsfertig und härtet unter Vemetzungsreaktionen aus. Der Hydroxylgruppengehalt des Polyester- bzw. Polyacrylatharzes liegt vorzugsweise im Bereich von 4,5 bis 8 Gew.-% OH. Das NCO/OH-Äquivalenzverhältnis kann im Bereich von 0,8 : 1 bis 3 : 1 eingestellt werden und liegt vorzugsweise bei 1,5 : 1. Der Festkörpergehalt des Polyester- bzw. Polyacrylatharzes liegt vorzugsweise zwischen 80 und 90 Gew.-%, Rest organisches Lösemittel. Die Polyester- bzw. Polyacrylatharze haben eine Viskosität von 1.000 bis 11.000 mPa s/23 °C, gemessen im Rotationsviskdsimeter. Sie werden in ihrer wasserunlöslichen Form, also carboxylat- und sulfonatfrei, in wässriger Emulsion eingesetzt, wobei die Emulsion mit Hilfe eines dem Polyester- und/oder Polyacrylatharz zugegebenen Emulgators hergestellt wird. Als Emulgatoren sind anionaktive, nichtionogene und kationaktive Emulgatoren geeignet, die üblicherweise für die Herstellung von Kunststoffen und Bindemitteln durch Polymerisation, beispielsweise als Basisemulgatoren für alle Arten der Emulsionspolymerisation oder als Coemulgatoren zur Stabilisierung von Polymerdispersionen, eingesetzt werden. Die Emulgatorzugabe liegt zwischen 0,1 bis 10 Gew.-%, bezogen auf die lösemittelhaltige Form des Polyester- bzw. Polyacrylatharzes. Nach Zugabe des Emulgators zum Polyester- bzw. Polyacrylatharz erfolgt eine Verdünnung mit Wasser, so daß eine stabile Emulsion mit einem Festkörpergehalt (Gehalt an Polyester- und/oder Polyacrylatharz) von vorzugsweise 25 bis 60 Gew.-% resultiert. Zur Herstellung des gebrauchsfertigen Beschichtungsmittels wird die Polyisocyanatkomponente in die beschriebene Emulsion eingerührt, wobei die Polyisocyanatkomponente emulgiert wird. Der Gehalt an freien NCO-Gruppen der Polyisocyanatkomponente liegt im Bereich von 8 bis 32 Gew.-%, bezogen auf den Festkörper der Komponente. Die Viskosität beträgt 40 bis 9.000 mPa s/23 °C (gemessen im Rotationsviskosimeter). Erforderlichenfalls kann die Polyisocyanatkomponente in Abmischung mit geringen Mengen eines inerten Lösungsmittels zum Einsatz gelangen, um die Einarbeitung der Polyisocyanatkomponente b) in die Bindemittelkomponente a) zu verbessern. Es entstehen hochwertige vemetzte Filme, die den aus der organischen Lackpraxis bekannten Beschichtungen in bezug auf ihre Eigenschaften nicht nachstehen. Überraschenderweise haben die Emulgatoren keinen negativen Einfluß auf die Filmeigenschaften.

Gegenstand der Erfindung ist ferner ein Verfahren zur Herstellung wasserverdünnbarer Bindemittel für einen mit Polyisocyanat aushärtenden Zweikomponentenlack, wie vorstehend beschrieben, mit den in den Ansprüchen 5 und 6 angegebenen Verfahrensmerkmalen.

Der erfindungsgemäße Zweikomponentenlack ist für Beschichtungen aller Art, Imprägnierungen und Lasuren geeignet. Es versteht sich, daß die üblichen Hilfs- und Zusatzstoffe der Lacktechnologie der Bindemittelkomponente zugesetzt werden können. Dazu gehören insbesondere Entschäumungsmittel, Verlaufshilfsmittel, Pigmente, Dispergierhilfsmittel für die Pigmentverteilung, und dergleichen.

Die Tabelle 1 zeigt anhand von Beispielen A bis F ohne Beschränkung der erfindungsgemäßen Lehre geeignete Zusammensetzungen für eine Bindemittelkomponente, die als Reaktionskomponente eines Zweikomponenten-Beschichtungsmittels eingesetzt werden kann. Als Polyacrylatharz wurde ein aus, der lösemittelhaltigen Lackpraxis bekanntes, in Butylacetat gelöstes Harz (Johncryl 507, Johnson Polymer) eingesetzt, wobei der Festkörpergehalt durch Lösemitteldestillation zuvor auf 85 Gew.-%, Rest Lösemittel, aufkonzentriert wurde. Als Polyesterharz wurde ein ebenfalls aus der lösemittelhaltigen Lackpraxis bekanntes, in Butylacetat gelöstes Harz (Synthoester HD 170, Synthopol Chemie) verwendet, wobei der Festkörpergehalt 80 Gew-%, Rest Lösemittel, betrug. Arylpolyglykolether (Emulgator WNS, Bayer), 2,4,7,9-Tetramethyl-5 decin-4,7-Diol (SURFYNOL 104, Air Products), Sorbitanester (DISPONIL SMO, Henkel) und Rizinusölethoxylat wurden in den angegebenen Mengen als handelsübliche Emulgatoren dem Polyester- bzw. Polyacrylatharz zugegeben. Anschließend erfolgte eine Verdünnung mit Wasser, wobei stabile Emulsionen resultierten.

Anschließend können die Emulsionen durch Zugabe üblicher Hilfs- und Zusatzstoffe der Lacktechnologie, beispielsweise Pigmenten und Entschäumungsmitteln, die dem Verwendungszweck entsprechend eingestellt werden. Hierbei kann auch eine weitergehende Verdünnung mit Wasser erfolgen.

Die Bindemittelkomponente liegt in Form einer wässrigen Emulsion vor. In die Emulsion wird eine flüssige organische Polyisocyanatkomponente aus mindestens einem Polyisocyanat mit freien Isocynatgruppen emulgierend eingerührt Die Mischung ist für begrenzte Zeit gebrauchsfertig und härtet unter Vernetzungsreaktionen aus. Es resultieren hochwertig vernetzte Filme, wie sie aus der organischen Lackpraxis bekannt sind. Die Wasserbeständigkeit der Beschichtungsmittel ist z.B. bereits nach vier Stunden gegeben.

### Ausführungsbeispeil 1:

Aus der in Tabelle 1 angegebenen wässrigen Emulsion A wurde eine Bindemittelkomponente mit der folgenden Zusammensetzung hergestellt:
48,0 Teile Emulsion A
28,0 Teile Titandioxid Rutil (R KB-4, Bayer AG)
0,2 Teile Entschäumer (Byk 034, Fa. Byk Wesel).

Die Mischung wurde mit einem Dissolver vordispergiert, anschließend 15 Minuten in einer Perlmühle homogenisiert und danach mit 23,8 Teilen destilliertem Wasser weiterverdünnt.

Nach Zugabe von 15,9 Teilen Polyisocyanat (Tolunate HDT 90, Rhone Poulenc) erhielt man einen über drei Stunden vearbeitungsfähigen Zweikomponentenlack.

### Ausführungsbeispiel 2:

Die in Tabelle 1 angegebene wässrige Emulsion C wurde zu einer Bindemittelkomponente mit der folgenden Zusammensetzung weiterverarbeitet:
52,0 Teile Emulsion C
28,0 Teile Titandioxid Rutil (R KG-4, Bayer AG)
0,1 Teile Entschäumer (Byk 034, Firma Byk Wesel)
0,1 Teile Netzmittel (Fluorad FC 129, 3M).

Die Mischung wurde mit einem Dissolver vordispergiert, anschließend 15 Minuten in einer Perlmühle homogenisiert und schließlich mit 19,8 Teilen destilliertem Wasser verdünnt.

Nach Zugabe von 19,3 Teilen Polyisocyanat (Desmodur VP LS 2550, Bayer AG), erhielt man einen über fünf Stunden verarbeitungsfähigen Zweikomponentenlack.

Die in den Ausführungsbeispielen 1 und 2 beschriebenen Lacke wurden mit destilliertem Wasser auf eine Auslaufzeit von 45 sec nach DIN 53211-4 eingestellt und mit einer Schichtdicke von 50 µm auf Glasplatten appliziert. Die ausgehärteten Lacke hatten die in Tabelle 2 angegebenen Eigenschaften:

**Tabelle 1**

| | **A** | **B** | **C** | **D** | **E** | **F** |
|---|---|---|---|---|---|---|
| Polyacrylatharz 85% Butylacetat OH-Gehalt 4,5% | 69 | 59 | - | 49 | 29 | 10 |
| Polyesterharz 80% Butylacetat OH-Gehalt 5% | - | 10 | 69 | 20 | 40 | 50 |
| Arylpolyglykolether | 1 | 1 | 1 | 1 | | |
| 2, 4, 7, 9-Tetra methyl-5-decin 4,7-Diol | 0.3 | 0.3 | 0.3 | 0.3 | 0.5 | 0.5 |
| Sorbitanester | 0.5 | 0.5 | | | | |
| Rizinusölethoxylat | | | 0.8 | 0.8 | 2.5 | 2.8 |
| dest. Wasser | 29.2 | 29.2 | 28.9 | 28.9 | 28 | 27.7 |

**Tabelle 2**

| **Eigenschaften** | **Ausführungs-beispiel 1** | **Ausführungs-beispiel 2** |
|---|---|---|
| Glanz nach DIN 67530 (Einstrahlungswinkel 20°) | 88 % | 79 % |

| Pendelhärte nach DIN 53157 | | |
|---|---|---|
| gemessen bei Raumtemperatur nach 1 Tag | 44 sec | 48 sec |
| gemessen bei Raumtemperatur 7 Tagen | 93 sec | 98 sec |

| Lösemittelbeständigkeit nach 14 Tagen, gemessen bei Raumtemperatur | | |
|---|---|---|
| Super Benzin bleifrei | gut | gut |
| Methoxypropylacetat | gut | gut |
| Testbenzin | sehr gut | sehr gut |

## Patentansprüche

1. Zweikomponentenlack, bestehend aus
a) einer die üblichen Hilfs- und Zusatzstoffe der Lacktechnologie enthaltenden, mit 0,1 bis 10 Gew.-%, bezogen auf die lösemittelhaltige Form des Harzes, eines anion- oder kationaktiven oder nichtionogenen Emulgators stabilisierten wässrigen Emulsion eines in einem organischen Lösmittel gelösten Harzes mit einem Festkörpergehalt von mehr als 70 Gew.-%, Rest organisches Lösemittel wobei es sich bei dem Harz um ein wasserunlösliches, carboxylat- und sulfonatfreies Polyester- und/oder Polyacrylatharz mit einem Gehalt an Hydroxylgruppen von 2,5 bis 8 Gew.-% handelt und
b) einem flüssigen organischen Polyisocyanat mit freien Isocyanatgruppen.

2. Zweikomponentenlack nach Anspruch 1, wobei der Festkörpergehalt des in organischem Lösemittel gelösten Polyester- und/oder Polyacrylatharzes 80 bis 90 Gew.-%, Rest Lösemittel, beträgt.

3. Zweikomponentenlack nach Anspruch 1 oder 2, wobei der Gehalt an Hydroxylgruppen des Polyester- und/oder Polyacrylatharzes im Bereich von 4,5 bis 8 Gew.-% OH liegt.

4. Zweikomponentenlack nach einem der Ansprüche 1 bis 3, wobei das NCO/OH-Äquivalenzverhältnis im Bereich von 0,8 : 1 bis 3: 1 eingestellt ist.

5. Verfahren zur Herstellung eines Zweikomponentenlackes durch Einrühren eines flüssigen organischen Polyisocyanates mit freien Isocyanatgruppen in ein in wässriger Phase vorliegendes Polyester- und/oder Polyacrylatharz mit einem Gehalt an Hydroxylgruppen von 2,5 bis 8 Gew.-%, wobei die wässrige Phase auch die üblichen Hilfsund Zusatzstoffe der Lacktechnologie enthält, **dadurch gekennzeichnet, daß** man als Polyester- und/oder Polyacrylatharz ein mit einem Festkörpergehalt von mehr als 70 Gew.-%, Rest organisches Lösemittel, in einem organischen Lösemittel gelöstes, wasserunlösliches, carboxylat- und sulfonatfreies Polyester- und/oder Polyacrylatharz verwendet, das nach Zugabe eines anion- oder kationaktiven oder nichtionogenen Emulgators in einer Menge von 0,1 bis 10 Gew.-%, bezogen auf die lösemittelhaltige Form des Polyester- bzw. Polyacrylatharzes, mit Wasser verdünnt und zu einer stabilen, wässrigen Emulsion verarbeitet worden ist.

6. Verfahren nach Anspruch 5, **dadurch gekennzeichnet, daß** ein Polyester- und/oder Polyacrylatharz verwendet wird, welches für die organische Lackpraxis bestimmt ist und in einem organischen Lösemittel verdünnt vorliegt, und daß der Festkörpergehalt der Lösung vor der Zugabe des Emulgators durch Lösemitteldestillation auf zumindest 80 Gew.-%, Rest Lösemittel, aufkonzentriert wird.

## Claims

1. A two-component lacquer, consisting of
a) an aqueous emulsion consisting of a water-insoluble polyester and/or polyacrylate resin that has a solids content greater than 70 % by weight, the balance being organic solvent, that is free from carboxylate and sulphonate, and has a content of hydroxyl groups from 2.5 to 8 % by weight and is dissolved in an organic solvent, which emulsion containing the customary adjuvant and additive substances of lacquer technology and being stabilised with 0.1 to 10 % by weight, relative to the solvent-containing form of the resin, of an anion- or cation-active or non-ionogenic emulsifier, and
b) a liquid organic polyisocyanate comprising free isocyanate groups.

2. A two-component lacquer according to claim 1, wherein the solids content of the polyester and/or polyacrylate resin which is dissolved in an organic solvent is 80 to 90 % by weight, balance solvent.

3. A two-component lacquer according to claim 1 or 2, wherein the content of hydroxyl groups of the polyester and/or polyacrylate resin falls within the range from 4.5 to 8 % by weight OH.

4. A two-component lacquer according to any one of claims 1 to 3, wherein the NCO/OH equivalent ratio is adjusted within the range from 0.8:1 1 to 3:1.

5. A method of producing a two-component lacquer by stirring a liquid organic polyisocyanate comprising free socyanate groups into a polyester and/or polyacrylate resin, which exists in the aqueous phase and which has a content of hydroxyl groups of from 2.5 to 8 % by weight, wherein the aqueous phase also contains the customary adjuvant and additive substances of lacquer technology, **characterised in that** a water-insoluble polyester and/or polyacrylate resin which is free from carboxylate and sulphonate, which is dissolved in an organic solvent and which has a solids content greater than 70 % by weight, balance organic solvent, is used as the polyester and/or polyacrylate resin, which resin, after the addition of an anion- or cation-active or non-ionogenic emulsifier in an amount of 0.1 to 10 % by weight with respect to the solvent-containing form of the polyester or polyacrylate resin, has been diluted with water and processed to form a stable aqueous emulsion.

6. A method according to claim 5, **characterised in that** a polyester and/or polyacrylate resin is used which is intended for organic lacquer practice and exists diluted in an organic solvent, and that before the addition of the emulsifier the solids content of the solution is concentrated by distillation of the solvent to at least 80 % by weight, balance solvent.

## Revendications

1. Vernis à deux composants, consistant en
a) une émulsion aqueuse contenant des substances auxiliaires et additionnelles usuelles de la technologie des vernis, stabilisée avec 0,1 à 10 % en poids, par rapport à la forme contenant du solvant de la résine, d'un émulsifiant actif au niveau anion ou cation ou non ionogénique d'une résine dissoute dans un solvant organique avec une teneur en corps solide de plus de 70 % en poids, le reste étant un solvant organique, alors qu'il s'agit pour la résine d'une résine de polyester et/ou de polyacryle non soluble dans l'eau, exempte de carboxylates et de sulfonates, avec une teneur en groupes hydroxyles de 2,5 à 8 % en poids, et
b) un polyisocyanate organique liquide avec des groupes isocyanates libres.

2. Vernis à deux composants selon la revendication 1, dans lequel la teneur en substances solides de la résine polyester et/ou polyacrylate dissoute dans un solvant organique est de 80 à 90 % en poids, le reste étant du solvant.

3. Vernis à deux composants selon la revendication 1 ou 2, dans lequel la teneur en groupes hydroxyles de la résine polyester et/ou polyacrylate est de l'ordre de 4,5 à 8 % en poids de OH.

4. Vernis à deux composants selon l'une quelconque des revendications 1 à 3, dans lequel le rapport des équivalents NCO/OH est compris dans la gamme allant de 0,8:1 1 à 3:1.

5. Procédé de préparation d'un vernis à deux composants, par introduction d'un polyisocyanate organique liquide, ayant des groupes isocyanates libres, dans une résine polyester et/ou polyacrylate se trouvant dans une phase aqueuse, ayant une teneur en groupes hydroxyles de 2,5 à 8 % en poids, la phase aqueuse contenant également des adjuvants et additifs usuels de la technologie des vernis, **caractérisé par le fait que** l'on utilise, en tant que résine polyester et/ou polyacrylate, une résine polyester et/ou polyacrylate insoluble dans l'eau, ayant une teneur en substances solides supérieure à 70 % en poids, dissoute dans un solvant organique, exempte de carboxylates et de sulfonates, le reste étant constitué par un solvant organique, qui, après addition d'un émulsifiant anionique, cationique ou non ionique en une proportion de 0,1 à 10 % en poids, par rapport à la forme de la résine polyester et/ou polyacrylate qui contient du solvant, a été diluée avec de l'eau et transformée en une émulsion aqueuse stable.

6. Procédé selon la revendication 5, **caractérisé par le fait que** l'on utilise une résine polyester et/ou polyacrylate qui est spécifiquement prévue pour le domaine des vemis organiques et qui est diluée dans un solvant organique, et que la teneur en substances solides de la solution avant l'addition de l'émulsifiant est amenée, en éliminant le solvant par distillation, à au moins 80 % en poids, le reste étant du solvant.
